# EUROPÄISCHE PATENTSCHRIFT

(11) **EP 1 129 756 B1**
(45) Veröffentlichungstag und Bekanntmachung des Hinweises auf die Patenterteilung: **12.07.2006**
(21) Anmeldenummer: 01810054.5
(22) Anmeldetag: 22.01.2001
(51) Int. Cl.: B01D 29/68, B01D 29/15, E03F 5/14

(54) **Regenwasser-Reinigungsvorrichtung mit einem rohrförmigen Sieb**
Rainwater purification equipment with cylindrical screen
Appareil de purification d'eau pluviale à tamis tubulaire

(30) Priorität: 03.03.2000 CH 4122000; 22.03.2000 CH 5482000
(43) Veröffentlichungstag der Anmeldung: 05.09.2001
(73) Patentinhaber: Oekag Wassertechnik (Schweiz) AG, 6005 Luzern (CH)
(72) Erfinder: Morandini, Giorgio, 6005 Luzern (CH); Moos, Heinz, Dipl. Ing., 76189 Karlsruhe (DE)
(74) Vertreter: Gachnang, Hans Rudolf

(56) Entgegenhaltungen:
- DE-A- 3 920 097
- DE-A- 4 326 228
- DE-C- 4 025 465
- FR-A- 2 044 866
- US-A- 5 733 464

## Beschreibung

Gegenstand der Erfindung ist eine Regenwasser-Reinigungsvorrichtung mit einem rohrförmigen Sieb gemäss Oberbegriff des Patentanspruchs 1.

Die Reinigung von rohrförmigen Sieben, bei denen die zu reinigende Flüssigkeit von aussen radial nach innen fliesst, ist aufwendig, da das Rohr- und Siebinnere schlecht zugänglich ist, um von dort Spülwasser in Gegenrichtung fliessen zu lassen. Sind solche Siebe im Bereich von Abwasseranlagen installiert, so ist eine sporadische Reinigung unumgänglich, ansonst die Ablagerungen auf der Aussenseite des Siebes bei Abwesenheit von Wasser eintrocknen und zu einer harten Kruste erstarren können.

Aufgabe der Erfindung ist die Schaffung einer Regenwasser-Reinigungsvorrichtung mit einem rohrförmigen Sieb, das durch geeignete Massnahmen eine geringere Neigung zur Verschmutzung aufweist.

Gelöst wird die Aufgabe durch eine Regenwasser-Reinigungsvorrichtung mit den Merkmalen des Anspruchs 1. Weitere vorteilhafte Ausgestaltungen der Erfindung sind in den abhängigen Ansprüchen definiert.

Durch die Ausrichtung des dem Sieb zufliessenden Schmutzwassers in einem spitzen Winkel zur Sieboberfläche kann die Ablagerung von Schmutzteilen am Sieb wesentlich verringert und es können damit die Reinigungsintervalle vergrössert werden. Diese Technik ist als Cross Flow Technik bekannt. Die schraubenlinienförmig am Fuss des Leitrohrs angebrachten Ausgleichsöffnungen erzeugen beim Entleeren des Beckens zwischen dem Leitrohr und dem Sieb eine rotierende aufsteigende Wassersäule um das Sieb herum und sie verteilen das einströmende Wasser über einen grossen Siebbereich.

Anhand illustrierter Ausführungsbeispiele wird die Erfindung näher erläutert. Es zeigen:
- Figur 1: einen Querschnitt durch eine in ein Becken eingesetzte Regenwasser-Reinigungsvorrichtung mit in spitzem Winkel dem Sieb zugeleitetem Schmutzwasser,

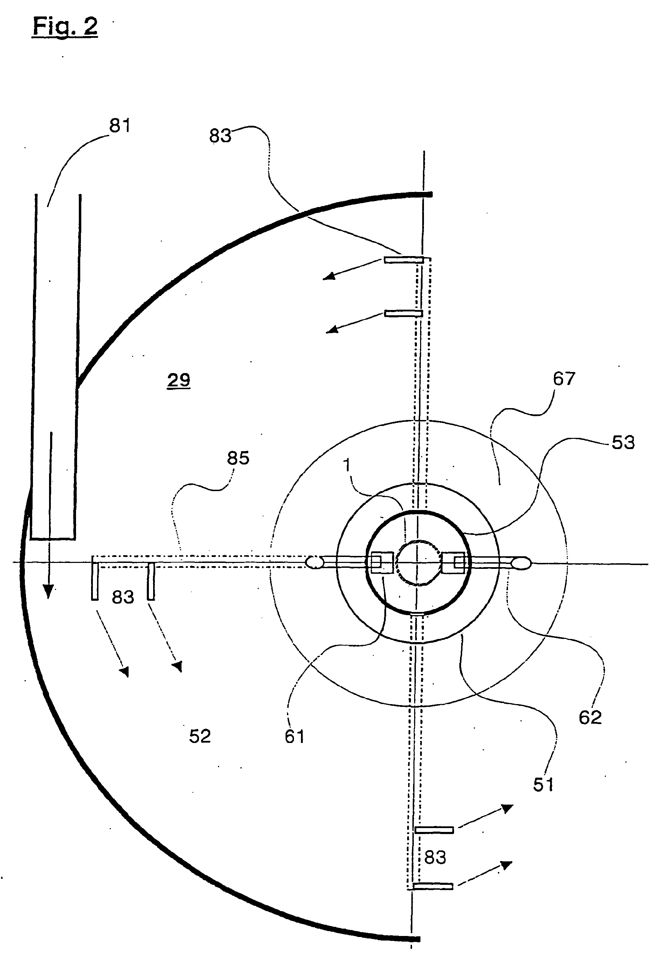

- Figur 2: eine Aufsicht/Grundriss des Beckens von oben,
- Figur 3: einen Teilaxialschnitt durch das Leitrohr im Bereich der Ausgleichsöffnung,
- Figur 4: einen Schnitt längs Linie XVI-XVI in Figur 3 durch die Ausgleichsöffnung,
- Figur 5: eine perspektivische Darstellung eines Regenwasserbehälters (teilweise aufgeschnitten) mit drei rohrförmigen Sieben mit Standrohr.

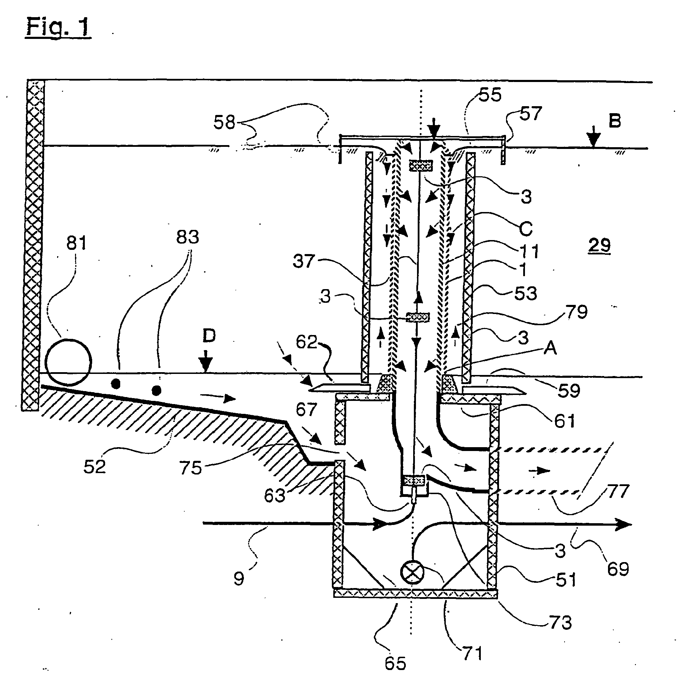

In Figur 1 ist ein Becken 29 mit einer besonders vorteilhafte Anordnung mit einer selbsttätigen oder unterstützenden Reinigungsvorrichtung 3 und mit einem rohrförmigen Sieb 1, das auf ein Stützrohr 11 aufgezogen ist, dargestellt. Das Rohr 11 ist mit einem Schacht 51 im Boden 31 des Beckens 29 verbunden, der das untere Ende des Rohres 11 umschliesst und allenfalls auch als Verankerung dient. Das Sieb 1 und das Rohr 11 sind innerhalb eines Leitrohrs 53 angeordnet, das in einem Abstand zur Peripherie des Siebes 1 liegt. Selbstverständlich könnte das Sieb 1 auch ohne Stützrohr 11 innerhalb des Leitrohrs 53 eingesetzt und an seinen Enden durch Ringe 35 gespannt gehalten sein (keine Abb.). Die Höhe des Leitrohrs 53 ist kleiner als die Höhe des Rohres 11 und - falls das Sieb 1 ohne Stützrohr 11 oder ein als Sieb wirkendes poröses Rohr eingesetzt ist - auch kleiner als die Höhe des Siebes 1. In einem radialen Abstand zur als Überlauf dienenden Oberkante 55 des Leitrohrs 53 kann eine ringförmige Tauchwand 57 zum Fernhalten von aufschwimmenden Verunreinigungen 58 vorgesehen sein. Im Bereich des Bodens 59, im dargestellten Beispiel ist es der Deckel des Schachtes 51, sind im Leitrohr 53 eine Anzahl von Ausgleichsöffnungen 61 ausgebildet, welche sicherstellen, dass zu Beginn eines Regenereignisses beim Füllen des Beckens 29, in welchem die Vorrichtung angeordnet ist, stets etwa der gleiche Wasserstand wie ausserhalb des Leitrohrs 53 vorliegt.

Die Ausgleichsöffnungen 61 dienen beim Entleeren dem Abzug des Schlamms aus dem Leitrohr 53. In einer bevorzugten Ausgestaltung können an den Ausgleichsöffnungen 61 aussen rohr- oder halbschalenförmige Fortsätze 62 ausgebildet sein. Im Inneren des Leitrohrs 53 verlaufen die Ausgleichsöffnungen 61 schraubenlinienförmig nach oben. Dies bewirkt beim Entleeren des Beckens 29, wenn über die Oberkante 55 des Leitrohrs 53 kein Wasser mehr zufliesst und der Wasserstand im Leitrohr-Innenraum schneller fällt als ausserhalb, dass durch den hydraulischen Druck der Wassersäule im Becken 29 eine von unten gespeiste, um das Sieb 1 rotierend aufsteigende Wassersäule gebildet wird.

Innerhalb des Schachtes 51 geht das Rohr 11 in einen Krümmer oder ein Bogenstück 63 über, in welchen die Düse 7 eingesetzt und mit der Hochdruckleitung 9 verbunden ist.

Der Boden des Schachtes 51 weist vorzugsweise einen Sumpf 65 auf, aus dem Schlamm aus dem Schlammsammler 67 seitlich des Schachts 51 am Boden 52 des Regenwasserbeckens 29 mit einer Pumpe 71 durch eine Leitung 69 absaugbar ist. Der Schlammsammler 67 liegt unterhalb des Niveaus D des konisch hergestellten Beckenbodens 52. In seinem Zentrum ist der Beckenboden 52 vorzugsweise zusätzlich als Rinne abgetieft, um die abgelagerten Sedimente zu sammeln und durch Öffnungen 68 in den Schacht 51 einzuleiten.

Der Schmutzwasserzulauf in das Becken 29 erfolgt mit Vorteil tangential durch das mindestens eine Zulaufrohr 81. Dieses mündet im Wandbereich, um eine Rotation des im Becken 29 gesammelten verschmutzten Wassers zu erzeugen. Durch die starke Rotation werden die absinkenden Schmutzteile sukzessive zum Zentrum, d.h. in den Schlammsammler 67 geführt. Sie können von dort sporadisch mit der Pumpe 71 abgesaugt werden. Zur Feinreinigung von am Boden 52 anhaftenden abgesetzten Sedimenten können zusätzlich tangential wirkende Wasserdüsen 83 auf dem Beckenboden 52 angeordnet sein. Diese werden vorzugsweise durch Leitungen 85 von einer zentralen Pumpe (nicht sichtbar) abwechslungsweise und/oder pulsierend mit Wasser versorgt. Eine manuelle Reinigung des Beckens 29 kann dadurch entfallen.

Über einer Düse kann der Reinigungskopf 3, in unterschiedlichen Höhenlagen eingezeichnet, liegen. In der tiefsten Stellung liegt er innerhalb eines Topfs 73 und schützt die Düse gegen Verschmutzung. Der Reinigungskopf 3 kann vertikal frei beweglich oder an einem Seil oder einem Stab 37 geführt sein.

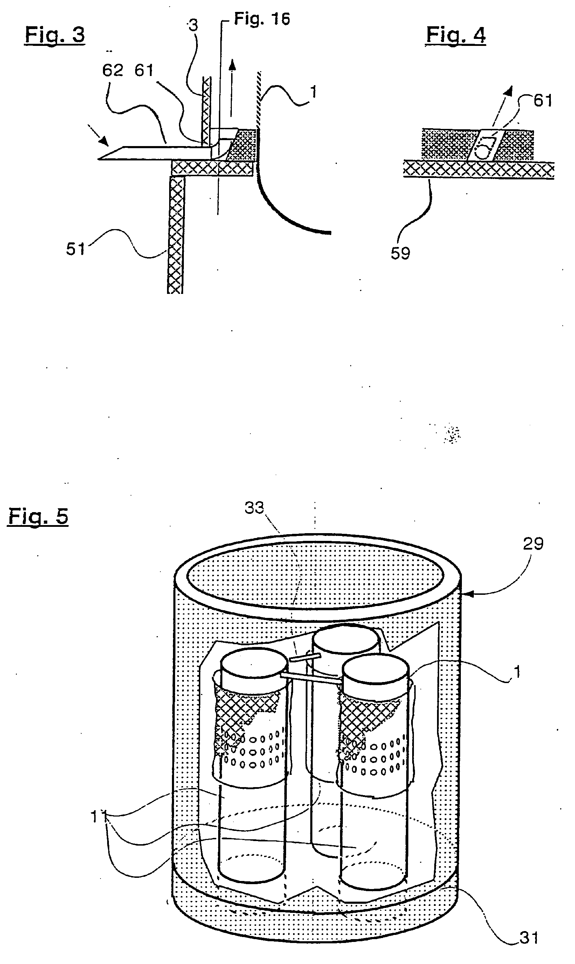

Alternativ können bei sehr grossen Becken 29 innerhalb eines Leitrohres 53 auch mehrere Siebe 1 angeordnet sein (vgl. Figur 5).

Mit der Maschenweite des Siebes 1 kann die gewünschte Wasserabflussmenge aus dem Behälter 29 definiert werden. Die Siebe 1 bilden folglich gleichzeitig nebst der Funktion der Reinigung gleichzeitig auch ein Drosselelement für die abfliessende Wassermenge.

Im folgenden wird die Funktionsweise der Wasserreinigung gemäss Figur 13 näher erläutert. Nach einer Trockenperiode fliesst verschmutztes Wasser, z.B. Meteorwasser durch die Leitung 81 in das Becken 29. Dabei wird zuerst der Schacht 51 durch die Öffnungen 75 im Bereich des Schlammsammlers 67 und das Becken 29 bis zum Pegel D gefüllt. Diese meist stärker verunreinigte erste Wassermenge kann nicht durch die Leitung 77 zum Vorfluter gelangen. Sie wird einer vorzugsweise biologisch arbeitenden Abwasserreinigungsanlage zugeführt. Bei weiter steigendem Wasserspiegel füllt sich das Becken 29 und es beginnt im Fussbereich A des Siebes 1 Wasser durch dieses hindurch abzufliessen. Sobald der üblicherweise sehr rasch ansteigende Wasserspiegel die Oberkante 55 des Leitrohrs 53 erreicht hat und geringfügig darüber liegt (Pegel B) setzt eine im wesentlichen parallel zur Sieboberfläche verlaufende, nach unten gerichtete Strömung (Pfeile C) innerhalb des zylindermantelförmigen Bereichs 79 im Leitrohr 53 ein. Die Druckdifferenz zwischen dem Siebinnern, das nur frei abfliessendes Wasser enthält und dadurch keine Wassersäule enthält, die einen Gegendruck aufbaut, und dem zylindermantelförmigen Bereich 79 lässt das Wasser durch das Sieb 1 hindurchtreten; die Verunreinigungen werden hingegen grösstenteils durch die Strömung C und die Schwerkraft nach unten geschleppt und können durch die Ausgleichsöffnungen 61 nach aussen in den Sumpf 67 gelangen. Die von oben nach unten über das Sieb 1 fliessende Wasserströmung entfernt laufend abgelagerte Schmutzpartikel im sog. "Cross Flow Effekt".

Nach dem Ende des Regenereignisses und - falls notwendig auch während der Schmutzwasser-Reinigung - wird der im Schacht 51 und in der Schlammrinne bzw. dem Sumpf 67 gesammelte Schlamm mit der Pumpe 71 abgesaugt und abgeführt. Für die Fein- oder Nachreinigung des Siebes 1 kann - wie eingangs beschrieben - das Sieb 1 mit dem Reinigungskopf 3 von innen nach aussen mit Wasser gespült werden.

Der Einsatz der erfindungsgemässen Vorrichtungen erreicht die höchste Wirtschaftlichkeit, wenn sie in runden Behältern 29 eingesetzt sind, in welche das Schmutzwasser tangential eingeleitet wird und dadurch eine Konzentration der Schwebeteile im Zentrum des rotationssymmetrischen Behälters 29 erreicht wird. Das Absetzen der im Behälter 29 ausserhalb des Leitrohrs 63 durch Sedimentation ausgeschiedenen Verunreinigungen erfolgt dadurch grösstenteils direkt im Sumpf 67.

## Patentansprüche

1. Regenwasser-Reinigungsvorrichtung mit einem vertikal angeordneten rohrförmigen Sieb (1) in einem Becken (29), **dadurch gekennzeichnet, dass** mindestens ein rohrförmiges Sieb (1) von einem beabstandeten, oberhalb des Bodens (52) angeordneten Leitrohr (53) umschlossen ist und dass zwischen der Peripherie des mindestens einen Siebes (1) und dem Leitrohr (53) mit einer obenliegenden Überlaufkante (55) ein Fliessbereich (79) ausgebildet ist, der das oben über die überlaufkante (55) einlaufende verschmutzte Wasser entlang dem Sieb (1) nach unten leitet und dass am unteren Ende des Leitrohres (53) Ausgleichsöffnungen (61) zur Verbindung des Innern des Leitrohrs (53) mit dem Raum des Beckens (29) ausgebildet sind.

2. Reinigungsvorrichtung nach Anspruch 1, **dadurch gekennzeichnet, dass** die Ausgleichsöffnungen (61) in einem Schlammsammler (67) und/oder über dem Boden (52) des Beckens (29) liegen.

3. Reinigungsvorrichtung nach einem der Ansprüche 1 oder 2, **dadurch gekennzeichnet, dass** die Ausgleichsöffnungen (61) schraubenlinienförmig verlaufend von aussen nach innen ansteigend ausgebildet sind.

4. Reinigungsvorrichtung nach einem der Ansprüche 1 bis 3, **dadurch gekennzeichnet, dass** das Schmutzwasser durch mindestens eine tangential in das Becken (29) mündende Leitung (81) zuführbar ist.

5. Reinigungsvorrichtung nach einem der Ansprüche 1 bis 4, **dadurch gekennzeichnet, dass** am Boden (52) des Beckens (29) mehrere tangential angeordnete Düsen (83) zum Erzeugen von im wesentlichen tangential wirkenden Wasserstrahlen mit einer zentralen Wasserpumpe eingelassen sind, wobei durch die Pumpe Wasser kontinuierlich, intermittierend oder wechselweise den Düsen (83) zuführbar ist.

## Claims

1. A rainwater purification device with a vertically arranged tubular screen (1) in a basin (29), **characterised in that** at least one tubular screen (1) is enclosed by a distanced conduit pipe (53) arranged above the base (52), and that a flow region (79) is formed between the periphery of the at least one screen (1) and the conduit pipe (53) with an overflow edge (55) lying at the top, said flow region leading the contaminated water running in at the top over the overflow edge (55) downwards along the screen (1), and that compensation openings (61) for connecting the inside of the conduit pipe (53) to the space of the basin (29) are formed at the lower end of the conduit pipe (53).

2. A cleaning device according to claim 1, **characterised in that** the compensation openings (61) lie in a sludge collector (67) and/or over the base (52) of the basin (29).

3. A cleaning device according to one of the claims 1 or 2, **characterised in that** the compensation openings (61) are formed running in a helical manner ascending from the outside to the inside.

4. A cleaning device according to one of the claims 1 to 3, **characterised in that** the contaminated water may be fed by way of at least one conduit (81) running tangentially into the basin (29).

5. A cleaning device according to one of the claims 1 to 4, **characterised in that** several tangentially arranged nozzles (83) for producing water jets acting in an essentially tangential manner with a central water pump are admitted on the base (52) of the basin (29), wherein water may be fed to the nozzles (83) by the pump in a continuous, intermittent or alternating manner.

## Revendications

1. Appareil de purification d'eau pluviale doté d'un tamis tubulaire (1) placé verticalement dans un bassin (29), **caractérisé en ce qu'**au moins un tamis tubulaire (1) est entouré à distance d'un tuyau de conduite (53) placé au-dessus du fond (52) et qu'entre la périphérie d'au moins un tamis (1) et le tuyau de conduite (53) avec une bordure de trop-plein (55) placée au-dessus,est formée une zone d'écoulement (79), laquelle dirige l'eau sale entrant en haut par la bordure de trop-plein (55) vers le bas le long du tamis (1) et que sur l'extrémité inférieure du tuyau de conduite (53) sont formées des ouvertures de compensation (61) pour relier l'intérieur du tuyau de conduite (53) à l'espace du bassin (29).

2. Appareil de purification selon la revendication 1, **caractérisé en ce que** les ouvertures de compensation (61) reposent dans un collecteur de boues (67) et/ou au-dessus du fond (52) du bassin (29).

3. Appareil de purification selon l'une des revendications 1 à 2, **caractérisé en ce que** les ouvertures de compensation (61) sont formées en se profilant en forme d'hélice vers le haut, de l'extérieur vers l'intérieur.

4. Appareil de purification selon l'une des revendications 1 à 3, **caractérisé en ce que** l'eau sale peut être amenée par au moins une canalisation (81) débouchant de manière tangentielle dans le bassin (29).

5. Appareil de purification selon l'une des revendications 1 à 4, **caractérisé en ce que** sur le fond (52) du bassin (29), sont disposées plusieurs buses (83) agencées de manière tangentielle pour produire des jets d'eau agissant essentiellement de manière tangentielle au moyen d'une pompe à eau centrale, l'eau pouvant être amenée par la pompe de manière continue, intermittente ou alternative dans les buses (83).
